(19) Europäisches Patentamt
European Patent Office
Office européen des brevets

(11) Veröffentlichungsnummer: **0 358 604 B1**

# (12) EUROPÄISCHE PATENTSCHRIFT

(45) Veröffentlichungstag der Patentschrift: **20.07.94**

(51) Int. Cl.[5]: **C09B 33/04**, C09B 33/153, C09B 43/124, C09B 29/10, C08K 5/23

(21) Anmeldenummer: **89810640.6**

(22) Anmeldetag: **29.08.89**

Die Akte enthält technische Angaben, die nach dem Eingang der Anmeldung eingereicht wurden und die nicht in dieser Patentschrift enthalten sind.

## (54) Disazoverbindungen mit langkettigen Alkylester- oder Alkylamidresten.

(30) Priorität: **07.09.88 CH 3363/88**
**30.03.89 CH 1160/89**

(43) Veröffentlichungstag der Anmeldung:
**14.03.90 Patentblatt 90/11**

(45) Bekanntmachung des Hinweises auf die Patenterteilung:
**20.07.94 Patentblatt 94/29**

(84) Benannte Vertragsstaaten:
**DE FR GB IT**

(56) Entgegenhaltungen:
**EP-A- 0 095 442**
**US-A- 470 353**
**US-A- 2 774 755**
**US-A- 2 888 452**
**US-A- 3 997 521**

(73) Patentinhaber: **CIBA-GEIGY AG**
**Klybeckstrasse 141**
**CH-4002 Basel(CH)**

(72) Erfinder: **Hari, Stefan, Dr.**
**Ringstrasse 5**
**CH-4153 Reinach(CH)**
Erfinder: **Bäbler, Fridolin, Dr.**
**Route du Couchant 12**
**CH-1723 Marly(CH)**

**EP 0 358 604 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Disazoverbindungen enthaltend langkettige Alkylester- oder Alkylamidreste, und ihre Verwendung zum Einfärben von hochmolekularem organischem Material, insbesondere von Polyolefinen.

Azopigmente mit Esterresten sind schon lange bekannt. Rote Disazopigmente sind z.B. in den US-Patenten Nr. 3137688 und Nr. 4689403 beschrieben, während gelbe Disazoverbindungen z.B. im US-Patent Nr. 4003886 offenbart werden. Ein Hauptmerkmal der dort aufgeführten Verbindungen besteht darin, dass sie mindestens vier Alkylesterreste aufweisen, wobei der Alkylrest bis max. 4 C-Atome enthält. Weitere gelb bis rote Disazopigmente mit Alkylesterresten sind auch in den US-Patenten 4070353, 3997521 und 2774755 sowie in EP-A 95442 beschrieben. Auch in all diesen Publikationen handelt es sich um Alkylesterreste deren Alkylrest als Niederalkyl angedeutet wird, wobei wiederholt Ethyl und insbesondere Methyl als bevorzugt dargestellt werden. Auch Monoazopigmente mit einem niederen Alkylesterrest sind bekannt, wie z.B. gemäss US-Patent Nr. 4392999. Disazopigmente mit Alkylamidgruppen sind z.B. im US-Patent Nr. 3562249 beschrieben.

Derartige Produkte besitzen zwar im allgemeinen gute Pigmenteigenschaften, sie genügen jedoch z.B. wegen knapper Hitzebeständigkeit und/oder ungenügender Dispergierbarkeit nicht immer den heutigen Anforderungen der Technik.

Es ist nun gefunden worden, dass sich Disazopigmente mit mindestens zwei langkettigen Alkylester- oder Alkylamidresten überraschenderweise sehr gut zum Färben von hochmolekularen organischen Materialien, insbesondere von Polyolefinen, eignen, wobei sie eine verbesserte Dispergierbarkeit, eine geringe Ausblühtendenz und ausgezeichnete Pigmenteigenschaften aufweisen.

Die vorliegende Erfindung betrifft demnach Verbindungen der Formel I

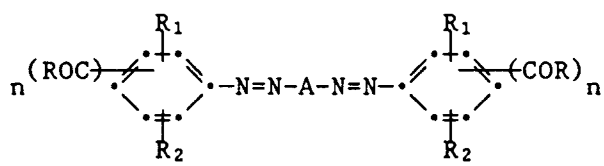 ,

(I)

worin R für einen Rest der Formeln $-OR_3$ oder $-NHR_3$ steht, A einen Rest der Formeln II oder III

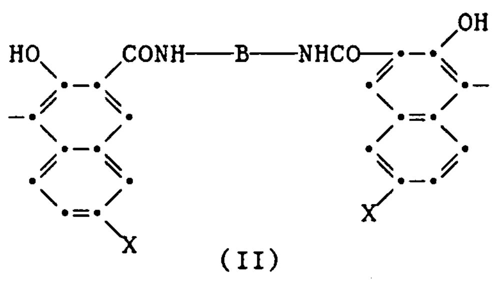 , 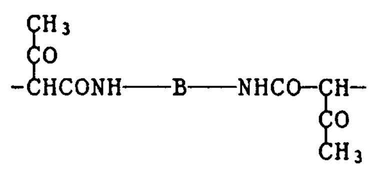 ,

(II) (III)

und B einen Rest der Formeln

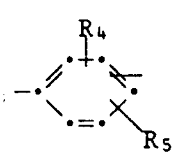 , 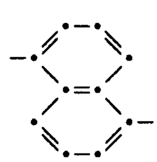 oder 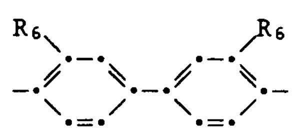

bedeuten,
wobei
n die Zahl 1 oder 2 ist,

$R_1$ -H oder -Cl,
$R_2$ -H, Halogen, $-NO_2$, -CN, $C_1$-$C_4$-Alkyl, $C_1$-$C_4$-Alkoxy, $-CF_3$, $C_2$-$C_5$-Alkoxycarbonyl, oder unsubstituiertes oder am Phenylkern durch ein oder zwei Chloratome oder eine oder zwei Methyl-, Methoxy- oder Ethoxygruppen substituiertes -CONH-Phenyl, -NHCO-Phenyl oder Phenyloxy,
$R_3$ Alkyl mit mindestens 10 C-Atomen,
$R_4$ und $R_5$ unabhängig voneinander -H, Halogen, $-NO_2$, -CN, $-CF_3$, $C_1$-$C_4$-Alkyl oder $C_1$-$C_4$-Alkoxy,
$R_6$ -H, -Cl, -Br, $-CH_3$ oder $-OCH_3$, und
X -H, -Br, $-OCH_3$, -CN oder $-NO_2$ bedeuten.

Halogen in den oben aufgeführten Gruppen bedeutet Fluor, Brom und insbesondere Chlor.

$C_1$-$C_4$-Alkyl als $R_2$, $R_4$ und $R_5$ bedeutet Methyl, Ethyl, n-Propyl, Isopropyl, n-Butyl, Isobutyl und tert-Butyl.

$C_1$-$C_4$-Alkoxy als $R_2$, $R_4$ und $R_5$ bedeutet z.B. Methoxy, Ethoxy, n-Propoxy, Isopropoxy, n-Butoxy und tert.-Butoxy.

$C_2$-$C_5$-Alkoxycarbonyl als $R_2$ ist z.B. Methoxycarbonyl, Ethoxycarbonyl, n-Propoxycarbonyl, Isopropoxycarbonyl, n-Butoxycarbonyl und tert-Butoxycarbonyl.

Die Reste B in den Formeln II und III leiten sich von m-Phenylen- und insbesondere von p-Phenylendiaminen der folgenden Formeln

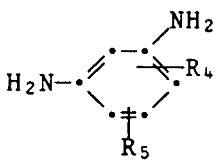

und

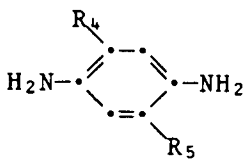

ab, worin
$R_4$ und $R_5$ die oben angegebene Bedeutung haben.

Beispiele für derartige Diamine sind:
1,4-Diaminobenzol, 1,4-Diamino-2-chlorbenzol, 1,4-Diamino-2-brombenzol,1,4-Diamino-2,5-dichlorbenzol, 1,4-Diamino-2-methylbenzol, 1,4-Diamino-2,5-dimethylbenzol, 1,4-Diamino-2-methoxybenzol, 1,4-Diamino-2,5-dimethoxybenzol, 1,4-Diamino-2,5-diethoxybenzol, 2-Chlor-5-methyl-1,4-phenylendiamin, 2-Chlor-5-methoxy-1,4-phenylendiamin, 2-Methyl-5-methoxy-1,4-phenylendiamin, 1,3-Diaminobenzol, 1,3-Diamino-2-methylbenzol, 1,3-Diamino-4-chlorbenzol und 1,3-Diamino-4-methylbenzol.

Beispiele von Diaminen, die sich vom Rest der Formel

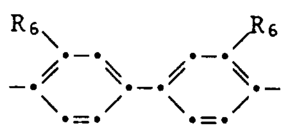

ableiten, sind:
3,3′-Dichlorbenzidin, 3,3′-Dibrombenzidin, 3,3′-Dimethylbenzidin und 3,3′-Dimethoxybenzidin.

Alkyl mit mindestens 10 C-Atomen (im Rest $-OR_3$ bzw. $-NHR_3$) ist verzweigtes oder geradkettiges Alkyl, z.B. n-Decyl, n-Dodecyl, n-Tridecyl, Isotridecyl, n-Tetradecyl (Myristyl), n-Pentadecyl, n-Hexadecyl, 1-Methylpentadecyl, n-Octadecyl, n-Eicosyl, n-Tetracosyl, n-Hexacosyl, n-Triacontyl und n-Pentacontyl.

Alkyl als $R_3$ steht bevorzugt für $C_{12}$- bis $C_{35}$-Alkyl, insbesondere für $C_{12}$- bis $C_{18}$-Alkyl, oder Gemische davon, z.B. die als Alfole bekannten und käuflichen Gemische von Alkoholen, die im wesentlichen Alkylgruppen mit gleicher C-Zahl besitzen und überwiegend verzweigt sind und als Ausgangsprodukte verwendet werden. Die Alkylgruppen werden bei den Alkoholen als "Alfyl" bezeichnet, z.B. Alfyl-$C_{12}$, Alfyl-$C_{14}$.

Bevorzugt sind Verbindungen der Formel I, wobei die Formel I folgende Struktur

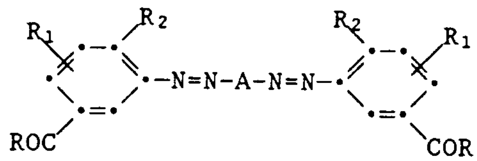

aufweist, und die Gruppen R, $R_1$, $R_2$ und A die oben angegebene Bedeutung haben.

Ebenfalls bevorzugt sind Verbindungen der Formel I, wobei die Formeln II und III die folgenden Strukturen

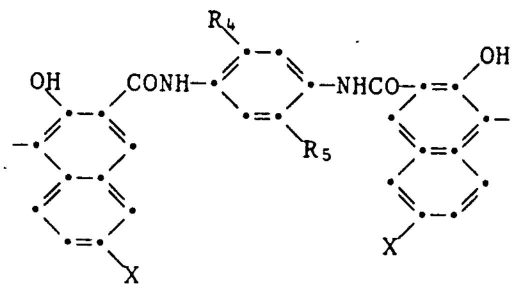

,

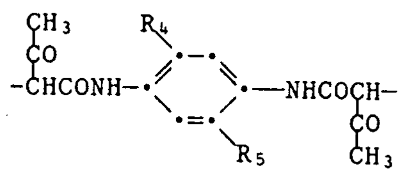

aufweisen und die Gruppen $R_4$, $R_5$ und X die oben angegebene Bedeutung haben.

Besonders bevorzugt sind Verbindungen der Formel IV

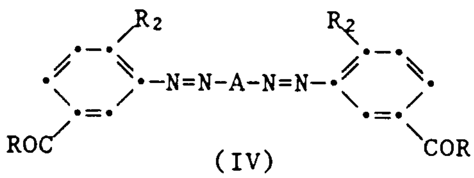

(IV)

,

worin A für einen Rest der Formeln V oder VI

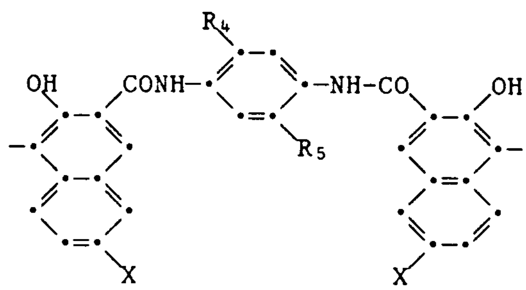

(V)

,

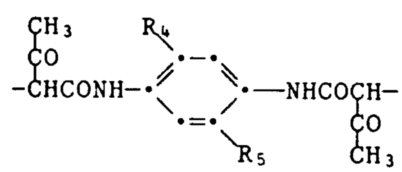

(VI)

steht, wobei R für einen Rest der Formeln $-OR_3$ oder $-NHR_3$ steht, und $R_2$ -H, -Cl, $-CH_3$, $-OCH_3$, $-OC_2H_5$, $-COOCH_3$, $-COOC_2H_5$ oder $-OC_6H_5$, $R_3$ $C_{12}$-$C_{35}$-Alkyl, und $R_4$ und $R_5$ unabhängig voneinander -H, -Cl, $-CH_3$, $-OCH_3$ oder $-OC_2H_5$ bedeuten. R steht ganz bevorzugt für einen Rest der Formel $-OR_3$.

In der Formel IV steht A bevorzugt für einen Rest der Formel V, insbesondere aber für einen Rest der Formel V, worin $R_2$ -Cl, $-CH_3$ oder $-OCH_3$, $R_3$ $C_{12}$-$C_{18}$-Alkyl, und $R_4$ und $R_5$ unabhängig voneinander -H, -Cl, $-CH_3$ oder $-OCH_3$ bedeuten.

Die Verbindungen der Formel I stellen bevorzugt symmetrische Verbindungen dar, worin die beiden Diazokomponenten gleich sind. Asymmetrische Verbindungen, worin die beiden Diazokomponenten verschieden sind, fallen auch unter die Definition der obigen Formel I.

Die Verbindungen der Formel I können nach an und für sich bekannten Verfahren hergestellt werden, z.B.:

a) durch Kondensation von 2 Mol eines Carbonsäurehalogenides` insbesondere eines Chlorides der Formel

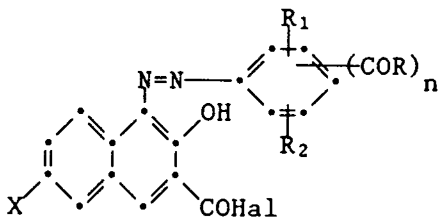

mit einem Diamin der Formeln
$H_2N-B-NH_2$, insbesondere

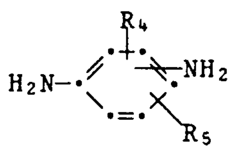

gemäss z.B. US-Patent Nr. 4689403, oder
durch Kondensation von 1 Mol eines Carbonsäurehalogenides der Formel

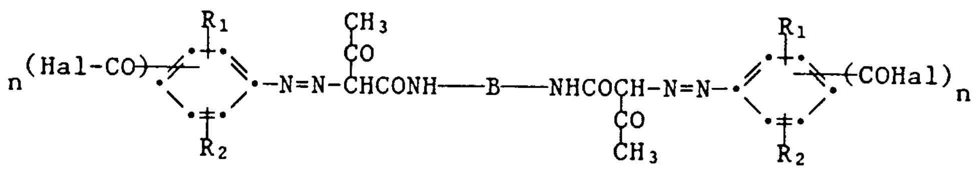

mit 2 Mol (bei n = 1) oder 4 Mol (bei n = 2) eines langkettigen Alkyl-Alkohols oder -Amins z.B. gemäss US-Patent Nr. 4065448, oder

b) durch Diazotierung eines Amins der Formel

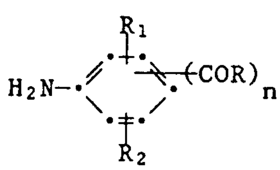

und anschliessende Kupplung der erhaltenen Diazokomponente mit einer Kupplungskomponente der Formeln

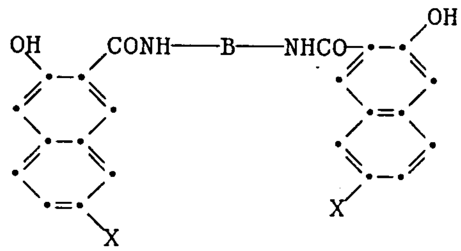 , 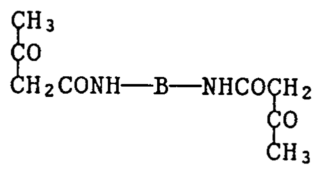 ,

z.B. gemäss US-Patent Nr. 4003886,

wobei die Gruppen n, B, R, $R_1$ bis $R_6$, Hal und X die oben angegebene Definition haben.

Die obigen Kupplungskomponenten sind bekannte Zwischenprodukte; die Carbonsäurehalogenide auf $\beta$-Oxynaphthoesäurebasis, sowie deren entsprechende Säuren, stellen dagegen neue Zwischenprodukte dar. Sie können nach bekannten Verfahren, z.B. gemäss US Patent Nr. 4689403, erhalten werden.

Ein bevorzugtes Herstellungsverfahren ist das Kondensationsverfahren gemäss obigem Schema a). Die Kondensation wird zweckmässig in Gegenwart eines organischen inerten Lösungsmittels bei Normal- oder Ueberdruck, mit oder ohne Katalysator, durchgeführt. Geeignete Lösungsmittel sind z.B. Toluol, Chlorbenzol, Dichlorbenzole, wie o-Dichlorbenzol, ferner Trichlorbenzole, Nitrobenzol oder Gemische aromatischer und/oder aliphatischer Lösungsmittel, wie ®Shellsole.

Die Verbindungen der Formel I können aber auch über eine Umesterungs-bzw. Amidierungsreaktion hergestellt werden, indem man eine Verbindung der Formel

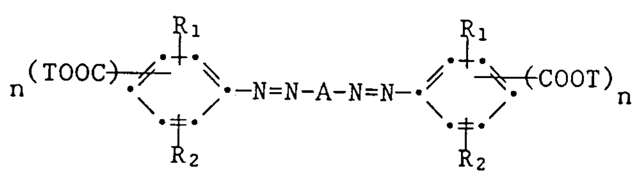 ,

worin T $C_1$-$C_3$-Alkyl bedeutet, und die übrigen Symbole n, A, $R_1$ und $R_2$ die oben angegebene Bedeutung haben, mit einem Alkohol oder einem Amin der Formel $R_3$-OH oder $R_3NH_2$ nach bekannten Verfahren zu Verbindungen der Formel I umestert bzw. umamidiert. T bedeutet Methyl, Ethyl, Propyl oder Isopropyl.

Die Umsetzung erfolgt zweckmässig direkt in einem Ueberschuss des entsprechenden langkettigen Alkohols oder Amins oder in Gegenwart eines organischen Lösungsmittels, wie z.B. Toluol, Xylole, Dichlorbenzole, Nitrobenzol, Chlornaphthalin, Anisol, ®Dowtherm, oder Ketone, wie Cyclohexanon, bei erhöhter Temperatur, z.B. im Siedebereich des verwendeten Lösungmittels, unter Normaldruck oder unter Druck, mit oder ohne Katalysatoren. Werden Katalysatoren eingesetzt, so sind z.B. Schwefelsäure, p-Toluolsulfonsäure, Methylsulfonsäure, LiH, $LiNH_2$, $NaOCH_3$, KO-tert-Butylat, Tetraalkyltitanate, Dibutylzinnoxid oder seltene Erden geeignet.

Die Isolierung der erhaltenen Verbindungen der Formel I erfolgt wie üblich z.B. durch Filtration. Das Nutschgut wird mit einem der bereits oben angegebenen Lösungsmittel und dann zweckmässig noch mit Wasser gewaschen. Sie werden im allgemeinen in guter Ausbeute und Reinheit erhalten und können ohne weitere Reinigung in feinverteilter Form z.B. zum Färben von hochmolekularem organischem Material verwendet werden.

Sofern ihre Reinheit und/oder Partikel-Form und -Grösse zur Anwendung als Pigmente noch nicht genügend bzw. optimal sind, können die anmeldungsgemässen Verbindungen weiter konditioniert werden. Unter Konditionierung versteht man die Herstellung einer feinen, für die Applikation optimalen Partikel-Form und -Grösse, beispielsweise durch Trockenmahlung mit oder ohne Salz, durch Lösungsmittel- oder wässrige Mahlung oder durch Salzknetung oder durch eine nachträgliche thermische Lösungsmittelbehandlung.

Thermische Lösungsmittelbehandlungen können z.B. in organischen Lösungsmitteln, vorzugsweise mit solchen, die über 100 °C sieden, durchgeführt werden.

Als besonders geeignet hierfür erweisen sich durch Halogenatome, Alkyl-oder Nitrogruppen substituierte Benzole, wie Toluol, Chlorbenzol, o-Dichlorbenzol, Xylole oder Nitrobenzol, Alkohole, wie Isopropanol oder Isobutanol, ferner Ketone, wie Cyclohexanon, Ether, wie Ethylenglykolmonomethyl-oder -monoethylether, Amide, wie Dimethylformamid oder N-Methyl-pyrrolidon, sowie Dimethylsulfoxyd, Sulfolan oder Wasser allein, gegebenenfalls unter Druck. Man kann die Nachbehandlung auch in Wasser in Gegenwart von

organischen Lösungsmitteln und/oder mit Zusatz von oberflächenaktiven Substanzen oder aliphatischen Aminen, oder in flüssigem Ammoniak, durchführen.

Je nach Konditionierverfahren und/oder Applikationszweck kann es von Vorteil sein, der anmeldungsgemässen Verbindung der Formel I gewisse Mengen an texturverbessernden Mitteln vor oder nach dem Konditionierprozess zuzufügen. Als solche kommen insbesondere Fettsäuren mit mindestens 18 C-Atomen, beispielsweise Stearin- oder Behensäure oder deren Amide oder Metallsalze, insbesondere Mg-Salze, sowie Weichmacher, Wachse, Harzsäuren, wie Abietinsäure, Kolophoniumseife, Alkylphenole oder aliphatische Alkohole, wie Stearylalkohol, oder vicinale Diole, wie Dodecandiol-1,2, ferner modifizierte Kolophoniummaleinatharze oder Fumarsäurekolophoniumharze, in Betracht. Die texturverbessernden Mittel werden vorzugsweise in Mengen von 0,1-30 Gew.%, insbesondere 2-15 Gew.%, bezogen auf das Endprodukt, zugesetzt.

Hochmolekulares organisches Material kann natürlicher oder künstlicher Herkunft sein. Es kann sich z.B. um Naturharze oder trocknende Oele, Kautschuk oder Casein oder um abgewandelte Naturstoffe, wie Chlorkautschuk, ölmodifizierte Alkydharze, Viscose, um Celluloseether oder -ester, wie Celluloseacetat, Cellulosepropionat, Celluloseacetobutyrat oder Nitrocellulose handeln, insbesondere aber um vollsynthetische organische Polymere (Duroplaste und Thermoplaste), wie sie durch Polymerisation, Polykondensation oder Polyaddition erhalten werden. Aus der Klasse der Polymerisationsharze seien in erster Linie genannt: Polyolefine, wie Polyethylen, Polypropylen oder Polyisobutylen, ferner substituierte Polyolefine, wie Polymerisate aus Vinylchlorid, Vinylacetat, Styrol, Acrylnitril, Acrylsäure- und/oder Methacrylsäureestern oder Butadien, sowie Kopolymerisate der erwähnten Monomeren, insbesondere ABS, EVA oder Acryl-styrol-acrylonitril (ASA).

Aus der Reihe der Polyadditionsharze und Polykondensationsharze seien die Kondensationsprodukte von Formaldehyd mit Phenolen, die sogenannten Phenoplaste, und die Kondensationsprodukte von Formaldehyd mit Harnstoff, Thioharnstoff und Melamin, die sogenannten Aminoplaste, die als Lackharze verwendeten Polyester, und zwar sowohl gesättigte, wie z.B. Alkydharze, als auch ungesättigte, wie beispielsweise Maleinatharze, ferner die linearen Polyester, Polycarbonate, Polyurethane und Polyamide oder Silikone genannt.

Die erwähnten hochmolekularen Verbindungen können einzeln oder in Gemischen, als plastische Massen oder Schmelzen, die gegebenenfalls zu Fasern versponnen werden können, vorliegen.

Sie können auch im polymerisierten Zustand in gelöster Form als Filmbildner oder Bindemittel für Lacke oder Druckfarben vorliegen, wie z.B. Leinölfirnis, Nitrocellulose, Alkydharze, Melaminharze und Harnstoff-Formaldehydharze oder Acrylharze.

Die Pigmentierung der hochmolekularen, organischen Substanzen mit den definitionsgemässen Verbindungen der Formel I erfolgt beispielsweise derart, dass man eine solche Verbindung gegebenenfalls in Form von Masterbatches, diesen Substraten unter Verwendung von Walzwerken, Misch-oder Mahlapparaten zumischt. Das pigmentierte Material wird hierauf nach an sich bekannten Verfahren wie Kalandrieren, Pressen, Strangpressen, Streichen, Verspinnen, Giessen oder durch Spritzguss in die gewünschte endgültige Form gebracht. Oft ist es erwünscht, zur Herstellung von nicht starren Formlingen oder zur Verringerung ihrer Sprödigkeit den hochmolekularen Verbindungen vor der Verformung sogenannte Weichmacher einzuverleiben. Als solche können z.B. Ester der Phosphorsäure, Phthalsäure oder Sebacinsäure dienen. Die Weichmacher können vor oder nach der Einverleibung des Pigmentes in die Polymeren eingearbeitet werden. Es ist ferner möglich, zwecks Erzielung verschiedener Farbtöne den hochmolekularen organischen Stoffen neben den erfindungsgemässen Verbindungen noch Füllstoffe bzw. andere farbgebende Bestandteile, wie Weiss-, Bunt-oder Schwarzpigmente, in beliebigen Mengen zuzufügen.

Zum Pigmentieren von Lacken und Druckfarben werden die hochmolekularen organischen Materialien und die Verbindungen der Formel I gegebenenfalls zusammen mit Zusatzstoffen, wie Füllmitteln, anderen Pigmenten, Siccativen oder Weichmachern, in einem gemeinsamen organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

Die anmeldungsgemässen Stoffzusammensetzungen enthalten vorzugsweise 0,01-20 Gew.% einer definitionsgemässen Verbindung der Formel I, beispielsweise in Kunststoffen, Fasern, Lacken und Drucken, und zeichnen sich durch gute Dispergierbarkeit, Ueberlackier-, Migrations-, Hitze-, Licht- und Wetterbeständigkeit, gute Farbstärke sowie durch einen guten Glanz, aus.

Die Verbindungen der Formel I werden aber bevorzugt zum Einfärben von Polyolefinen eingesetzt.

Als Beispiele für Polyolefine seien Polyethylen hoher und niederer Dichte (HD-PE, LD-PE und LLD-PE), Polypropylen und Polyisobutylen, sowie Copolymere von Polyolefinen mit z.B. Polyethern, Polyetherketonen oder Polyurethanen erwähnt.

Die Einfärbung erfolgt nach üblichen Verfahren, beispielsweise durch Mischen einer Verbindung der Formel I mit dem Polyolefingranulat oder -pulver und Extrudieren der Mischung zu Fasern, Folien oder Granulaten. Letztere können dann im Spritzgussverfahren zu Gegenständen verformt werden.

Die erhaltenen Ausfärbungen weisen hohe Reinheit und hohe Sättigung auf und zeichnen sich durch eine ausgezeichnete Dispergierbarkeit, durch gute allgemeine Beständigkeit, insbesondere gegen Hitze und Licht, sowie durch ihre geringe Ausblühtendenz, aus. Ein besonderer Vorteil von mit den erfindungsgemässen Verbindungen der Formel I gefärbten Polyethylengegenständen besteht darin, dass sie insbesondere im Falle von HD-PE, keine erhöhte Neigung zu Verzugs- und Deformationserscheinungen zeigen. Sie zeigen zudem eine hohe Säurebeständigkeit.

Die mit den erfindungsgemässen Verbindungen der Formel I in der Masse eingefärbten Kunststoff-Fasern, wie z.B. PP-Fasern, besitzen ausgezeichnete textile Eigenschaften, wie z.B. Licht- und Nassbeständigkeiten gegenüber Wasch- und Lösungsmitteln.

Die nachfolgenden Beispiele dienen zur Erläuterung der Erfindung.

Beispiel 1A: 18 g des Azofarbstoffes aus diazotiertem 4-Methyl-3-amino-benzoesäurestearylester und 2-Hydroxy-3-naphthoesäure werden in 150 g wasserfreiem Toluol suspendiert. Man gibt zum Gemisch 4,9 g Thionylchlorid und 6 Tropfen Dimethylformamid und erwärmt eine Stunde unter Rühren auf 67 bis 68 °C. Die dunkel gefärbte Lösung wird im Vakuum voll eingeengt. Das erhaltene Produkt wird dann mit 50 ml Petrolether aus dem Kolben herausgeholt, abgenutscht, und im Vakuum bei 50 °C getrocknet. Man erhält 16,95 g (91 % der Theorie) des Azofarbstoffcarbonsäurechlorides der Formel

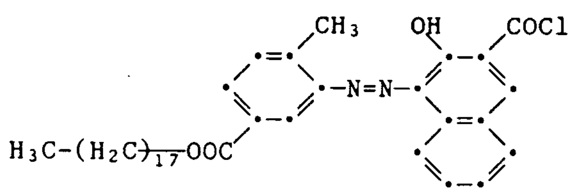

und vom Schmelzpunkt 107 bis 108 °C.

| Verbrennungsanalyse: | | | | |
|---|---|---|---|---|
| Ber. (in %) | C 71,53 | H 7,95 | Cl 5,71 | N 4,51; |
| Gef. (in %) | C 71,82 | H 8,07 | Cl 5,29 | N 4,45. |

14,25 g des so hergestellten Farbsäurechlorides werden mit 160 g wasserfreiem o-Dichlorbenzol verrührt und auf 80 °C erhitzt. Die klare dunkelrote Lösung wird bei dieser Temperatur mit einer 70 °C-warmen Lösung von 2,05 g 2,5-Dichlor-1,4-phenylendiamin in 150 ml o-Dichlorbenzol versetzt. Es fällt dabei ein roter Niederschlag aus. Man erwärmt die entstandene rote Suspension unter Rühren auf 120 °C und rührt während 16 Stunden bei dieser Temperatur weiter. Das Produkt wird heiss abgenutscht, mit warmem o-Dichlorbenzol und dann heissem Methanol gewaschen. Nach dem Trocknen des Produktes im Vakuum bei 60 °C werden 14,1 g (91,5 % der Theorie) eines weichkörnigen roten Pulvers erhalten, das z.B. Polyethylen, Polyvinylchlorid und Polyamid in farbstarken roten Tönen von ausgezeichneter Hitze- und Lichtbeständigkeit färbt. Das Pigment besitzt folgende Struktur:

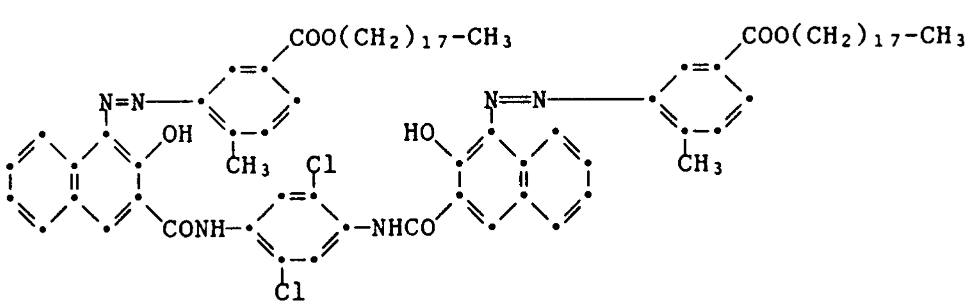

und weist folgende Verbrennungsanalyse auf:

| | | | | |
|---|---|---|---|---|
| Ber. (in %) | C 71,35 | H 7,64 | Cl 5,27 | N 6,24; |
| Gef. (in %) | C 71,29 | H 7,65 | Cl 5,43 | N 6,17. |

Beispiel 1B:

Verfährt man gleich wie im obigen Beispiel, verwendet man aber anstelle des dort angegebenen Azofarbstoffcarbonsäurechlorides eine entsprechende Menge des Azofarbstoffcarbonsäurechlorides der Formel

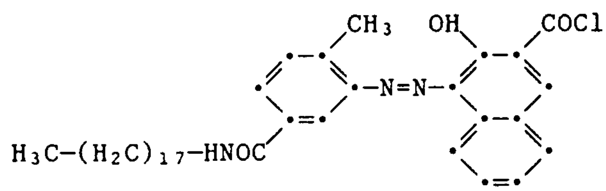

und an Stelle des 2,5-Dichlor-1,4-phenylendiamins eine entsprechende Menge des 2,5-Dimethyl-1,4-phenylendiamins, so erhält man ein rotes Pulver mit folgender Formel

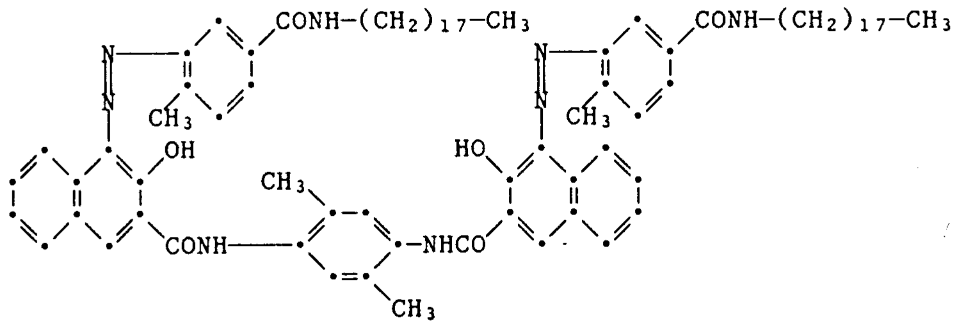

| Verbrennungsanalyse: | | | |
|---|---|---|---|
| Ber. in %: | C 75,54 | H 8,50 | N 8,59 |
| Gef. in %: | C 75,19 | H 8,48 | N 8,56 |

Beispiele 2 - 37

Die folgende Tabelle enthält weitere Pigmente, die nach dem Verfahren des obigen Beispiels 1B hergestellt werden können, indem man die Diazoverbindung der in der Kolonne I aufgeführten Amine auf 2-Hydroxy-3-naphthoesäure kuppelt, die erhaltene Azofarbstoffcarbonsäure dann in das entsprechende Säurechlorid überführt und dieses mit den in der Kolonne II angegebenen Diaminen im Molverhältnis 2:1 kondensiert. Kolonne III charakterisiert die Nuance der mit den erhaltenen Pigmenten gemäss Beispiel 63 eingefärbten Polyvinylchloridfolie.

| Bsp. | I | II | III |
|---|---|---|---|
| 2 | 4-Methyl-3-amino-benzoesäurestearylester | 2,5-Dimethyl-p-phenylendiamin | scharlach |
| 3 | 4-Methyl-3-amino-benzoesäurestearylester | p-Phenylendiamin | scharlach |
| 4 | 4-Methyl-3-amino-benzoesäurestearylester | 2-Chlor-p-phenylendiamin | rot |
| 5 | 4-Methyl-3-amino-benzoesäurestearylester | 2-Chlor-5-methyl-p-phenylendiamin | scharlach |
| 6 | 4-Methyl-3-amino-benzoesäurestearylester | 2,5-Dimethoxy-p-phenylendiamin | bordeaux |
| 7 | 4-Amino-benzoesäurestearylester | 2,5-Dimethyl-p-phenylendiamin | rot braun |
| 8 | 2-Amino-terephthalsäuredistearylester | 2,5-Dimethyl-p-phenylendiamin | gelbbraun |
| 9 | 3-Amino-benzoesäurestearylester | 2,5-Dichlor-p-phenylendiamin | rotorange |

| Bsp. | I | II | III |
|---|---|---|---|
| 10 | 3-Amino-benzoesäure-stearylester | 2,5-Dimethoxy-p-phenylendiamin | braun |
| 11 | 3-Amino-benzoesäure-stearylester | 2-Chlor-5-methyl-p-phenylendiamin | orange |
| 12 | 4-Chlor-3-amino-benzoesäurestearylester | p-Phenylendiamin | gelbbraun |
| 13 | 4-Chlor-3-amino-benzoesäurestearylester | 2,5-Dichlor-p-phenylendiamin | scharlach |
| 14 | 4-Chlor-3-amino-benzoesäurestearylester | 2,5-Dimethyl-p-phenylendiamin | rot |
| 15 | 4-Chlor-3-amino-benzoesäurestearylester | 2-Chlor-5-methyl-p-phenylendiamin | rot |
| 16 | 4-Chlor-3-amino-benzoesäurestearylester | 2,5-Dimethoxy-p-phenylendiamin | braun |
| 17 | 4-Methoxy-3-amino-benzoesäurestearylester | p-Phenylendiamin | karmin |
| 18 | 4-Methoxy-3-amino-benzoesäurestearylester | 2,5-Dichlor-p-phenylendiamin | scharlach |
| 19 | 4-Methoxy-3-amino-benzoesäurestearylester | 2,5-Dimethyl-p-phenylendiamin | karmin |
| 20 | 4-Methoxy-3-amino-benzoesäurestearylester | 2-Chlor-5-methyl-p-phenylendiamin | karmin |
| 21 | 4-Methoxy-3-amino-benzoesäurestearylester | 2,5-Dimethoxy-p-phenylendiamin | rot |
| 22 | 4-Methyl-3-amino-benzoesäure-n-decanylester | 2,5-Dichlor-p-phenylendiamin | rot |
| 23 | 4-Methyl-3-amino-benzoesäure-n-decanylester | 2,5-Dimethyl-p-phenylendiamin | rot |
| 24 | 4-Methyl-3-amino-benzoesäure-n-decanylester | 2,5-Dimethoxy-p-phenylendiamin | dunkelrot |
| 25 | 4-Methyl-3-amino-benzoesäure-n-decanylester | 2-Chlor-5-methyl-p-phenylendiamin | rot |
| 26 | 4-Methyl-3-amino-benzoesäure-n-tetradecanylester | 2,5-Dichlor-p-phenylendiamin | karminrot |
| 27 | 4-Methyl-3-amino-benzoesäure-n-tetradecanylester | 2,5-Dimethyl-p-phenylendiamin | rot |
| 28 | 4-Methyl-3-amino-benzoesäurelaurylester | 2,5-Dichlor-p-phenylendiamin | rot |
| 29 | 4-Methyl-3-amino-benzoesäurelaurylester | 2,5-Dimethyl-p-phenylendiamin | rot |

| Bsp. | I | II | III |
|---|---|---|---|
| 30 | 4-Methyl-3-amino-benzoesäurestearylester | 1,5-Diamino-naphthalin | karmin |
| 31 | 4-Methoxy-3-amino-benzoesäurestearylester | 1,5-Diamino-naphthalin | karmin |
| 32 | 4-Methyl-3-amino-benzoesäure-n-decanylester | 1,5-Diamino-naphthalin | karmin |
| 33 | 4-Methyl-3-amino-benzoesäure-n-tetradecanylester | 1,5-Diamino-naphthalin | karmin |
| 34 | 4-Methyl-3-amino-benzoesäurestearylester | 3,3'-Dichlor-benzidin | orange |
| 35 | 4-Methoxy-3-amino-benzoesäurestearylester | 3,3'-Dichlor-benzidin | rot |
| 36 | Anthranilsäure-stearylester | 2,5-Dichlor-p-phenylendiamin | orange |
| 37 | Anthranilsäure-laurylester | 2,5-Dichlor-p-phenylendiamin | orange |

Beispiel 38: 3,55 g des Disazodicarbonsäuredichlorides der Formel

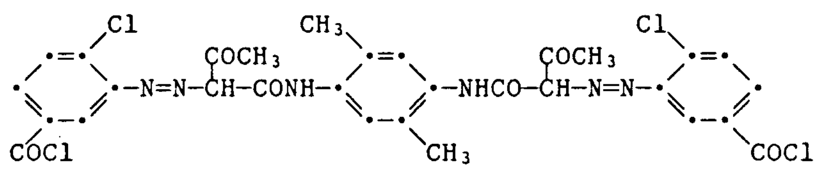

und 8,8 g Stearylalkohol (97 %ig) werden in 200 g o-Dichlorbenzol auf 140 °C erhitzt und während 6 Stunden bei dieser Temperatur gerührt. Die rotbraune Suspension löst sich dabei auf. Die entstandene trübe braune Lösung wird auf 100 °C abgekühlt und heiss filtriert. Es gibt praktisch keinen Rückstand. Aus dem Filtrat fällt ein gelber Niederschlag aus. Man gibt noch 120 g 96 %igen Ethylalkohols hinzu und nutscht das Produkt ab. Es wird mit 150 g 96 %igen Ethylalkohols gewaschen und im Vakuum bei 60 °C getrocknet. Man erhält 5,4 g (92,6 % der Theorie) eines intensiv gelben Pulvers der Formel

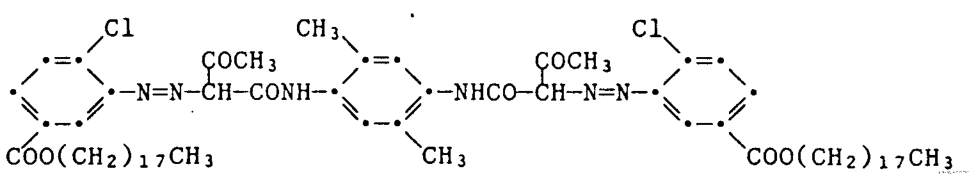

| Analyse: | | | | |
|---|---|---|---|---|
| Ber. (in %): | C 67,50 | H 8,41 | Cl 6,04 | N 7,16; |
| Gef. (in %): | C 67,35 | H 8,35 | Cl 6,25 | N 7,16. |

Das Produkt dieses Beispiels färbt Polyethylen, Polyamid und Polyvinylchlorid in farbstarken gelben Tönen von ausgezeichneter Hitze- und Lichtbeständigkeit.

Beispiele 39 - 44: In nachstehender Tabelle sind weitere Verbindungen beschrieben, die nach dem Verfahren des Beispieles 38 hergestellt werden können, indem man die Diazoverbindung der in der

Kolonne I aufgeführten Amine auf das Bisacetessigsäurearylid des in der Kolonne II aufgeführten Diamins kuppelt, die so erhaltene Disazofarbstoffdicarbonsäure in ihr entsprechendes Dicarbonsäuredichlorid überführt und dann dieses mit Stearylalkohol kondensiert. Kolonne III gibt den Farbton der mit diesen Pigmenten gefärbten PVC-Folie an.

| Bsp. | I | II | III |
|---|---|---|---|
| 39 | 4-Chlor-3-amino-benzoesäure | p-Phenylendiamin | grüngelb |
| 40 | 4-Chlor-3-amino-benzoesäure | 2-Chlor-p-phenylendiamin | grüngelb |
| 41 | 4-Methoxy-3-amino-benzoesäure | 2,5-Dimethyl-p-phenylendiamin | gelb |
| 42 | 4-Chlor-3-amino-benzoesäure | 2-Chlor-5-methyl-p-phenylendiamin | grüngelb |
| 43 | 4-Chlor-3-amino-benzoesäure | 2,5-Dichlor-p-phenylendiamin | grüngelb |
| 44 | 4-Methyl-3-amino-benzoesäure | 2, 5-Dimethyl-p-phenylendiamin | gelb |

Beispiel 45: 4,7 g 4-Chlor-3-amino-benzoesäurestearylester und 1,9 g 3,3'-Dimethyl-4,4'-diacetoacetylaminodiphenyl werden in 200 g Essigsäure auf 63 °C erhitzt. Die entstandene klare gelbe Lösung wird auf 53 °C abgekühlt und bei dieser Temperatur durch schnelles Zutropfen mit 2,86 ml einer 4 N-Natriumnitritlösung versetzt. Es fällt ein dicker, oranger Niederschlag aus. Die orange Suspension wird während 3 Stunden bei 56 °C gerührt, auf Raumtemperatur abgekühlt und abfiltriert. Das Nutschgut wird mit 200 g 96 %igem Ethylalkohol gewaschen und im Vakuum bei 60 °C getrocknet. Man erhält 5,8 g (93,55 % der Theorie) eines gelborangen Pulvers der Formel

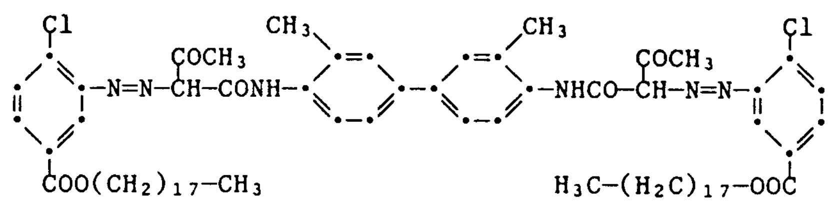

| Analyse: | | | | |
|---|---|---|---|---|
| Ber. (in %): | C 69,15 | H 8,22 | Cl 5,67 | N 6,72 |
| Gef. (in %): | C 69,43 | H 8,23 | Cl 5,43 | N 6,61 |

Dieses Produkt färbt Polyethylen, Polyamid und Polyvinylchlorid in farbstarken gelben Tönen. Die Hitze- und Lichtbeständigkeiten dieser Ausfärbungen sind ausgezeichnet.

Beispiele 46 - 61: In nachstehender Tabelle sind weitere Verbindungen beschrieben, die durch Kuppeln im Molverhältnis 2:1 der diazotierten Verbindung einer Base gemäss Kolonne I mit einem Bisacetessigsäurearylid eines Diamines der Kolonne II erhalten werden. Kolonne III gibt den Farbton der mit diesen Pigmenten gefärbten PVC-Folie an.

| Bsp. | I | II | III |
|---|---|---|---|
| 46 | 4-Chlor-3-amino-benzoesäurestearylamid | 2,5-Dimethyl-p-phenylendiamin | gelb |
| 47 | 4-Methyl-3-amino-benzoesäurestearylester | p-Phenylendiamin | grüngelb |
| 48 | 3-Amino-benzoesäurestearylester | 2,5-Dimethyl-p-phenylendiamin | grüngelb |
| 49 | 2,4-Dichlor-3-amino-benzoesäurestearylester | 2,5-Dimethyl-p-phenylendiamin | grüngelb |
| 50 | 4-Phenoxy-3-amino-benzoesäurestearylester | 2,5-Dimethyl-p-phenylendiamin | orangegelb |
| 51 | 5-Nitro-3-amino-benzoesäurestearylester | 2,5-Dimethyl-p-phenylendiamin | orange |
| 52 | 4-Chlor-3-amino-benzoesäurestearylester | 2,5-Dimethyl-p-phenylendiamin | orange |
| 53 | 4-Methyl-3-amino-benzoesäure-n-decanylester | 2,5-Dimethyl-p-phenylendiamin | gelb |
| 54 | 4-Methyl-3-amino-benzoesäurelaurylester | 2,5-Dimethyl-p-phenylendiamin | gelb |
| 55 | 4-Methyl-3-amino-bezoesäure-n-tetradecanylester | 2,5-Dimethyl-p-phenylendiamin | gelb |
| 56 | 4-Chlor-3-amino-benzoesäurestearylester | 3,3'-Dichlorbenzidin | grüngelb |
| 57 | 4-Chlor-3-amino-benzoesäurestearylester | 3,3'-Dimethoxybenzidin | orange |
| 58 | 4-Chlor-3-amino-benzoesäurestearylester | 2,5-Diaminonaphthalin | gelb |
| 59 | 4-Amino-benzoesäurestearylester | 2,5-Dimethyl-p-phenylendiamin | orange |
| 60 | 2-Amino-terephthalsäuredistearylester | p-Phenylendiamin | gelb |
| 61 | 2-Amino-terephthalsäuredistearylester | 2,5-Dimethyl-p-phenylendiamin | gelborange |

Beispiel 62: Eine Mischung von 1,0 g des nach Beispiel 1A erhaltenen Disazokondensationpigmentes, 1,0 g Antioxidans ®IRGANOX 1010 (CIBA-GEIGY AG) und 1000 g Polyethylen HD Granulat (®VESTOLEN A60-16, HUELS) wird während 15 Minuten in einer 3 l-Glasflasche auf einer Rollbank vorgemischt. Danach wird die Mischung zweimal durch einen Einwellenextruder extrudiert. Das so erhaltene Granulat wird dann auf einer Spritzgussmaschine (®Allround Aarburg 200) bei 250 °C mit einer Verweilzeit von 5 Minuten zu Platten verspritzt. Die so erhaltenen Platten weisen gleichmässig farbstarke blaustichig rote Färbungen hoher Reinheit und ausgezeichneter Lichtbeständigkeit auf.

Beispiel 63: 40 mg des gemäss Beispiel 1A erhaltenen Disazokondensationspigmentes werden mit 7,3 ml Dioctylphthalat und 13,3 g eines stabilisierten Polyvinylchlorids vom Typ ®LONZA E-722 in einem Becherglas mit einem Glasstab gut vermischt. Das erhaltene Gemisch wird dann auf einem Walzenstuhl während 5 Minuten bei 160 °C zu einer dünnen Folie verarbeitet. Die so erzeugte PVC-Folie weist eine sehr farbstarke, blaustichig rote Färbung hoher Reinheit und sehr guter Lichtbeständigkeit auf. Die Dispergierbarkeit des Pigmentes ist ausgezeichnet.

Nach analogem Verfahren lassen sich ebenfalls die in den Beispielen 2 bis 61 erfindungsgemäss erhaltenen Pigmente mit ebensoguten Eigenschaften einfärben.

Beispiel 64: 1000 g Polypropylengranulat (®DAPLEN PT-55, Chemie LINZ) und 1,0 g des nach Beispiel 1A erhaltenen Disazokondensationspigmentes werden in einer 3 l-Flasche während 15 Minuten auf dem Rollbock gemischt. Danach wird die Mischung zweimal durch einen Einwellenextruder extrudiert und anschliessend granuliert. Das so erhaltene Granulat wird bei 280-285 °C nach dem Schmelzspinnverfahren versponnen. Die so gefärbten Fasern weisen eine sehr gute Lichtbeständigkeit und ausgezeichnete textile Echtheiten, wie Reib- und Nassechtheiten gegenüber Wasch- und Lösungsmitteln, auf. Die Hitzebeständigkeit des Pigmentes während des Spinnprozesses bei 285 °C ist ausgezeichnet.

Beispiel 65: 100 g Polyamid ®GRILON A 25 (EMS-Chemie AG, Zürich) und 0,2 g des nach Beispiel 1A erhaltenen Disazokondensationspigmentes werden auf einem Laborturbulamischer (W.A. Bachofen, Basel) während 20 Minuten gut vermischt. Danach wird die Mischung auf einem Einwellenextruder bei 240 °C extrudiert. Das so erhaltene Band weist eine rote Färbung auf und zeigt gute Lichtbeständigkeiten.

Beispiel 66:

Verfährt man analog wie in Beispiel 62 beschrieben, verwendet aber neben dem Buntpigment 10 g Titandioxid ®KRONOS RN-57-P (KRONOS Titan GmbH), so erhält man rote Pressplatten mit ebensoguten Hitzebeständigkeiten. Die zwischen 200 und 280 °C gespritzten Pressplatten weisen nach dem Erkalten keine Farbabweichungen auf.

## Patentansprüche

**1.** Verbindungen der Formel I

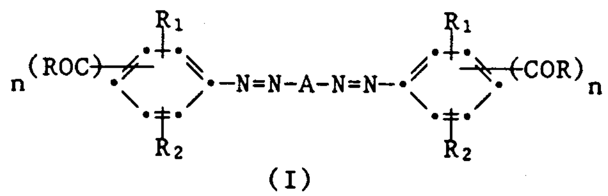

,

(I)

worin R für einen Rest der Formeln $-OR_3$ oder $-NHR_3$ steht,
A einen Rest der Formeln II oder III

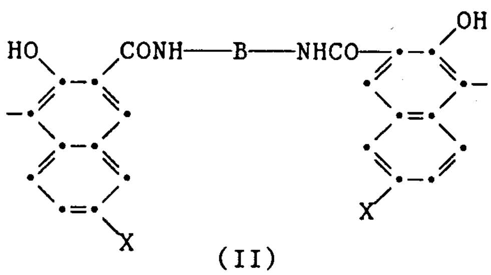

(II)

,

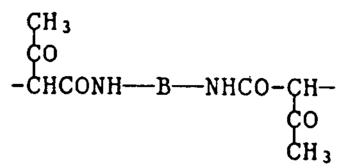

(III)

,

und B einen Rest der Formeln

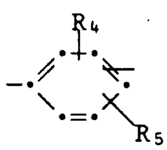

,

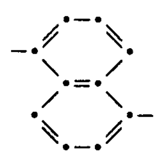

oder

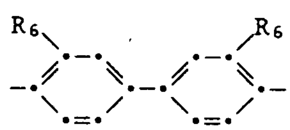

bedeuten,
wobei
n die Zahl 1 oder 2 ist,
$R_1$ -H oder -Cl,
$R_2$ -H, Halogen, $-NO_2$, -CN, $C_1$-$C_4$-Alkyl, $C_1$-$C_4$-Alkoxy, $-CF_3$, $C_2$-$C_5$-Alkoxycarbonyl, oder unsubstituiertes oder am Phenylkern durch ein oder zwei Chloratome oder eine oder zwei Methyl-, Methoxy- oder Ethoxygruppen substituiertes -CONH-Phenyl, -NHCO-Phenyl oder Phenyloxy,
$R_3$ Alkyl mit mindestens 10 C-Atomen,
$R_4$ und $R_5$ unabhängig voneinander -H, Halogen, $-NO_2$, -CN, $-CF_3$, $C_1$-$C_4$-Alkyl oder $C_1$-$C_4$-Alkoxy,
$R_6$ -H, -Cl, -Br, $-CH_3$ oder $-OCH_3$, und
X -H, -Br, $-OCH_3$, -CN oder $-NO_2$ bedeuten.

**2.** Verbindungen der Formel I gemäss Anspruch 1, wobei die Formel I folgende Struktur

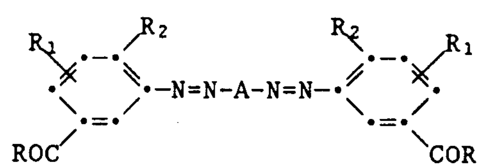

aufweist, und
die Gruppen R, $R_1$, $R_2$ und A die im Anspruch 1 angegebene Bedeutung haben.

**3.** Verbindungen der Formel I gemäss Anspruch 1, wobei die Formeln II und III die folgenden Strukturen

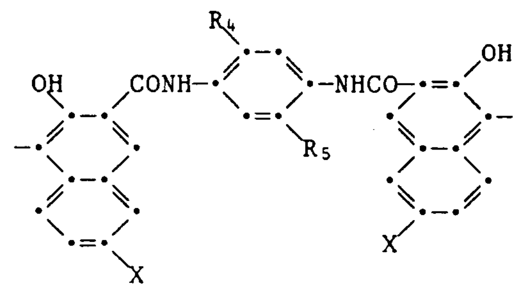

,

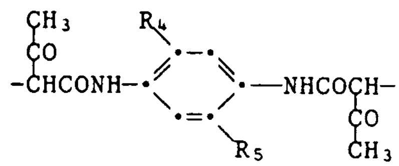

aufweisen und die Gruppen $R_4$, $R_5$ und X die im Anspruch 1 angegebene Bedeutung haben.

**4.** Verbindungen gemäss Anspruch 1 der Formel IV

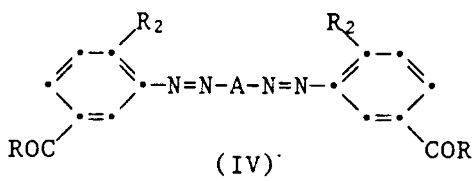

(IV) ,

worin A für einen Rest der Formeln V oder VI

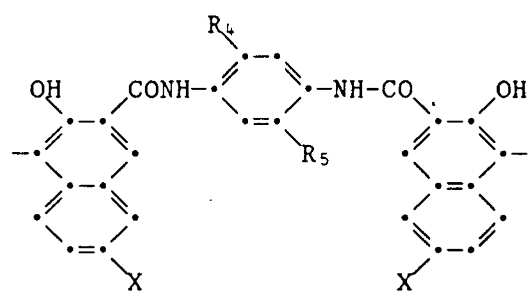

,

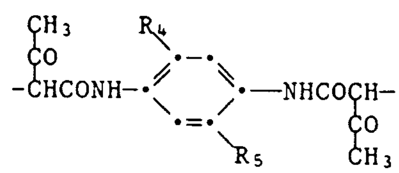

(V) (VI)

steht, wobei R für einen Rest der Formeln $-OR_3$ oder $-NHR_3$ steht, und $R_2$ -H, -Cl, $-CH_3$, $-OCH_3$, $-OC_2H_5$, $-COOCH_3$, $-COOC_2H_5$ oder $-OC_6H_5$, $R_3$ $C_{12}$-$C_{35}$-Alkyl, und $R_4$ und $R_5$ unabhängig voneinander -H, -Cl, $-CH_3$, $-OCH_3$ oder $-OC_2H_5$ bedeuten.

**5.** Verbindungen der Formel IV gemäss Anspruch 4, wobei R für einen Rest der Formel $-OR_3$ steht, und die übrigen Reste die im Anspruch 4 angegebene Bedeutung haben.

**6.** Verbindungen der Formel IV gemäss Anspruch 4, wobei A für einen Rest der Formel V steht, und die übrigen Gruppen die im Anspruch 4 angegebene Bedeutung haben.

**7.** Verbindungen der Formel IV gemäss Anspruch 4, wobei A für einen Rest der Formel V steht und $R_2$ -Cl, $-CH_3$ oder $-OCH_3$, $R_3$ $C_{12}$-$C_{18}$-Alkyl, und $R_4$ und $R_5$ unabhängig voneinander -H, -Cl, $-CH_3$ oder $-OCH_3$ bedeuten.

**8.** Verwendung der Verbindungen der Formel I gemäss Anspruch 1 zum Einfärben von hochmolekularem organischem Material.

9. Verwendung gemäss Anspruch 8, dadurch gekennzeichnet, dass das organische Material ein Polyolefin ist.

## Claims

1. A compound of the formula I:

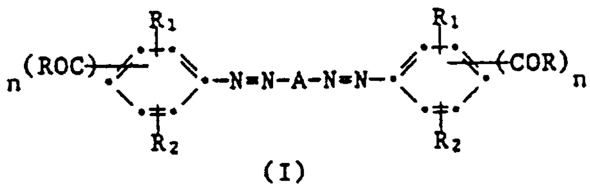,

(I)

in which R is a radical of the formula $-OR_3$ or $-NHR_3$, A is a radical of the formula II or III:

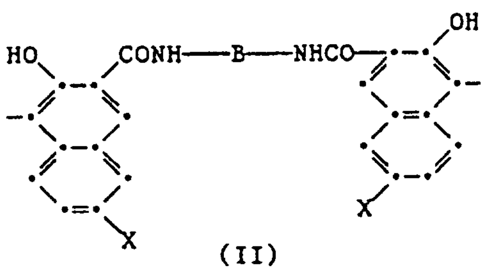,

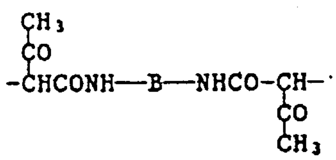,

(II) (III)

and B is a radical of the formula

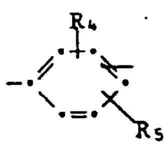, 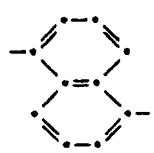 or 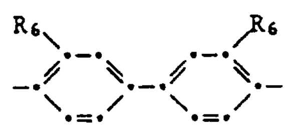

in which

n is the number 1 or 2, $R_1$ is -H or -Cl, $R_2$ is -H, halogen, $-NO_2$, -CN, $C_1$-$C_4$alkyl, $C_1$-$C_4$alkoxy, $-CF_3$, $C_2$-$C_5$alkoxycarbonyl or -CONH-phenyl, -NHCO-phenyl or phenoxy which is unsubstituted or substituted on the phenyl nucleus by one or two chlorine atoms or one or two methyl, methoxy or ethoxy groups, $R_3$ is alkyl having at least 10 C atoms, $R_4$ and $R_5$ are each independently of the other -H, halogen, $-NO_2$, -CN, $-CF_3$, $C_1$-$C_4$alkyl or $C_1$-$C_4$alkoxy, $R_6$ is -H, -Cl, -Br, $-CH_3$ or $-OCH_3$ and X is - H, -Br, $-OCH_3$, -CN or $-NO_2$.

2. A compound of the formula I according to claim 1 in which formula I has the following structure:

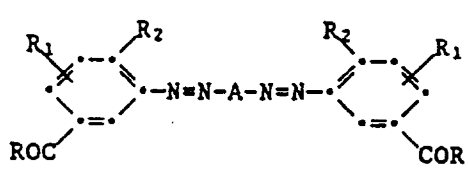

and the groups R, $R_1$, $R_2$ and A are as defined in claim 1.

**3.** A compound of the formula I according to claim 1 in which formulae II and III have the following structures:

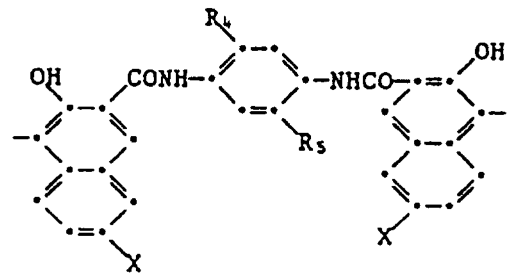 , 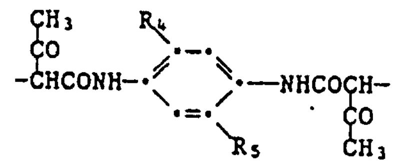

and the groups $R_4$, $R_5$ and X are as defined in claim 1.

**4.** A compound according to claim 1 of the formula IV:

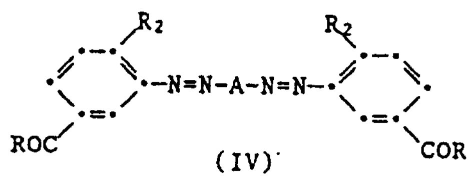

(IV)

in which A is a radical of the formula V or VI:

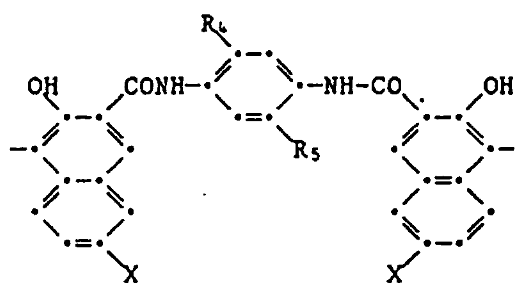 , 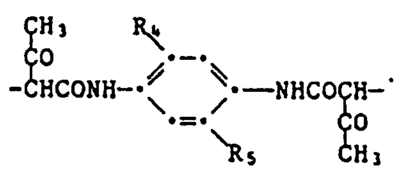

(V) (VI)

in which R is a radical of the formula $-OR_3$ or $NHR_3$, $R_2$ is -H, -Cl, - $CH_3$, $-OCH_3$, $-OC_2H_5$, $-COOCH_3$, $-COOC_2H_5$ or $-OC_6H_5$, $R_3$ is $C_{12}$-$C_{35}$alkyl and $R_4$ and $R_5$ are each independently of the other -H, -Cl, $-CH_3$, $-OCH_3$ or - $OC_2H_5$.

**5.** A compound of the formula IV according to claim 4 in which R is a radical of the formula $-OR_3$ and the remaining radicals are as defined in claim 4.

**6.** A compound of the formula IV according to claim 4 in which A is a radical of the formula V and the remaining groups are as defined in claim 4.

**7.** A compound of the formula IV according to claim 4 in which A is a radical of the formula V, $R_2$ is -Cl, $-CH_3$ or $-OCH_3$, $R_3$ is $C_{12}$-$C_{18}$alkyl and $R_4$ and $R_5$ are each independently of the other -H, -Cl, $-CH_3$ or $-OCH_3$.

**8.** Use of a compound of the formula I according to claim 1 for colouring high-molecular weight organic material.

**9.** Use according to claim 8, wherein the organic material is a polyolefin.

## Revendications

**1.** Composés de formule I

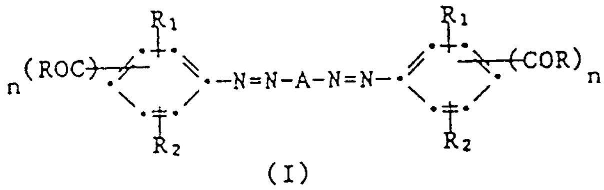

(I)

dans laquelle R représente un reste de formule $-OR^3$ ou $-NHR^3$,
A représente un reste de formule II ou III

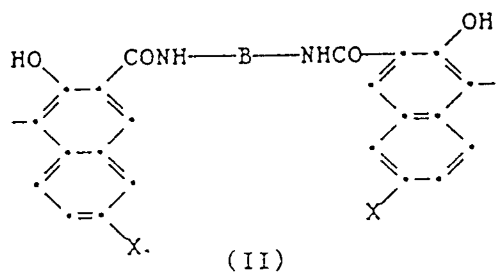

,

(II)

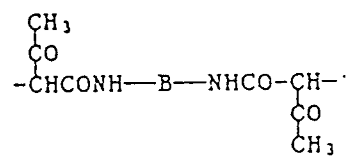

,

(III)

et B est un reste de formule

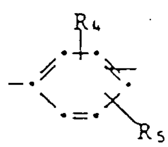

,

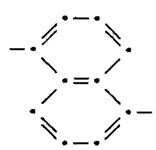

ou

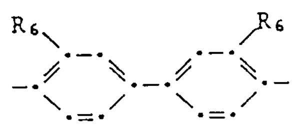

n est le chiffre 1 ou 2,
$R_1$ est -H ou -Cl,
$R_2$ signifie -H, un atome d'halogène, un groupe $-NO_2$, -CN, alkyle en $C_1$-$C_4$, alcoxy en $C_1$-$C_4$, $-CF_3$, alcoxycarbonyle en $C_2$-$C_5$, ou un groupe -CONH-phényle, -NHCO-phényle ou phényloxy non substitué ou substitué sur le noyau phényle par un ou deux atomes de chlore ou un ou deux groupes méthyle, méthoxy ou éthoxy,
$R_3$ représente un alkyle ayant au moins 10 atomes de carbone,
$R_4$ et $R_5$ signifient, indépendamment l'un de l'autre, -H, un atome d'halogène ou un groupe $-NO_2$, -CN, $-CF_3$, alkyle en $C_1$-$C_4$ ou alcoxy en $C_1$-$C_4$,
$R_6$ signifie -H,-Cl, -Br, $-CH_3$ ou $-OCH_3$, et
X représente -H, -Br, $-OCH_3$, -CN ou $-NO_2$.

**2.** Composés de formule I selon la revendication 1, où la formule I présente la structure suivante

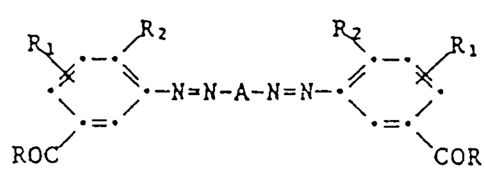

et les groupes R, $R_1$, $R_2$ et A ont la signification donnée dans la revendication 1.

**3.** Composés de formule I selon la revendication 1, où les formules II et III présentent les structures suivantes

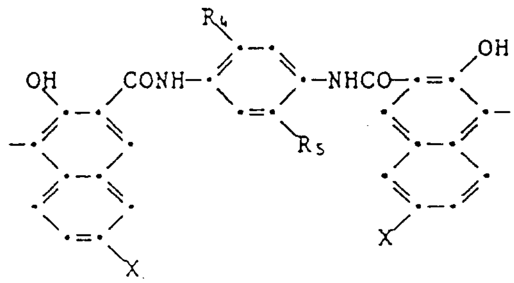
,
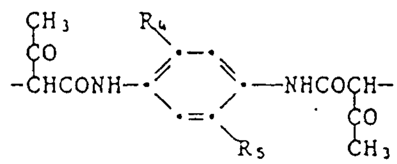

et les groupes $R_4$, $R_5$ et X ont la signification donnée dans la revendication 1.

**4.** Composés selon la revendication 1, de formule IV

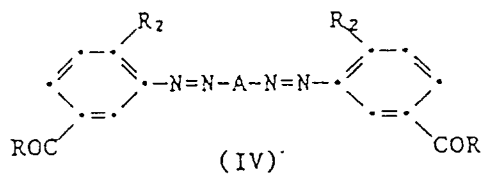
,

(IV)

dans laquelle A représente un reste de formule V ou VI

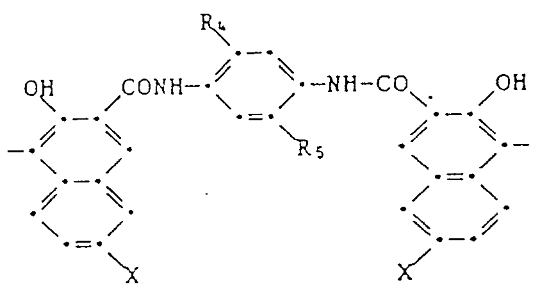
,
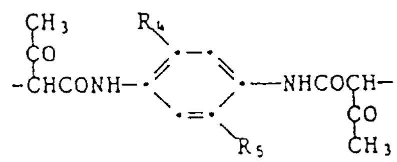

(V) (VI)

où R représente un reste de formule $-OR_3$ ou $-NHR_3$, et $R_2$ signifie -H,-Cl, $-CH_3$, $-OCH_3$, $-OC_2H_5$, $-COOCH_3$, $-COOC_2H_5$ ou $-OC_6H_5$, $R_3$ représente un alkyle en $C_{12}$-$C_{35}$, et $R_4$ et $R_5$ signifient, indépendamment l'un de l'autre, -H, -Cl, $-CH_3$, $-OCH_3$ ou $-OC_2H_5$.

**5.** Composés de formule IV selon la revendication 4, dans laquelle R représente un reste de formule $-OR_3$, et les autres restes ont la signification donnée dans la revendication 4.

**6.** Composés de formule IV selon la revendication 4, dans laquelle A représente un reste de formule V, et les autres groupes ont la signification donnée dans la revendication 4.

**7.** Composés de formule IV selon la revendication 4, dans laquelle A représente un reste de formule V et $R_2$ signifie -Cl, $-CH_3$ ou $-OCH_3$, $R_3$ est un alkyle en $C_{12}$-$C_{18}$, et $R_4$ et $R_5$ signifient, indépendamment l'un de l'autre, - H,-Cl, $-CH_3$ ou $-OCH_3$.

**8.** Utilisation des composés de formule I selon la revendication 1 pour la coloration de matières organiques macromoléculaires.

9. Utilisation selon la revendication 8, caractérisée en ce que la matière organique est une polyoléfine.